# FASCICULE DE BREVET EUROPEEN

(11) **EP 3 645 906 B1**
(45) Date de publication et mention de la délivrance du brevet: **23.06.2021**
(21) Numéro de dépôt: 18750245.5
(22) Date de dépôt: 29.06.2018
(51) Int. Cl.: F16D 25/0638, F16D 25/12, F16D 48/02

(54) **POMPE HYDRAULIQUE POUR INTERFACE DE CONNEXION HYDRAULIQUE D'UN MECANISME D'EMBRAYAGE**
HYDRAULIKPUMPE FÜR EINE HYDRAULISCHE VERBINDUNGSSTELLE EINES KUPPLUNGSMECHANISMUS
HYDRAULIC PUMP FOR A HYDRAULIC CONNECTION INTERFACE OF A CLUTCH MECHANISM

(30) Priorité: 30.06.2017 FR 1756225
(43) Date de publication de la demande: 06.05.2020
(73) Titulaire: Valeo Embrayages, 80009 Amiens Cedex 2 (FR)
(72) Inventeur: CAUMARTIN, Laurent, 80009 Amiens (FR); ARHAB, Rabah, 80009 Amiens (FR); KIM, Taemann, 80009 Amiens (FR); RIBOT, Herve, 80009 Amiens (FR); GUILHEM, Alexandre, 80009 Amiens (FR); DELPLACE, David, 80009 Amiens (FR)
(86) Numéro de dépôt international: PCT/FR2018/051608
(87) Numéro de publication internationale: WO 2019/002790

(56) Documents cités:
- EP-A1- 2 998 602
- DE-A1-102008 005 239
- US-A1- 2015 308 517

## Description

La présente invention concerne le domaine des mécanismes d'embrayage pour véhicule. Plus particulièrement, la présente invention concerne le domaine des pompes hydrauliques pour mécanismes d'embrayage, ainsi que le domaine des interfaces de connexion hydraulique pour de tels mécanismes d'embrayage.

On connaît dans le document EP 2 998 602 A un mécanisme d'embrayage à double embrayages humide comprenant principalement un module de transmission de couple, une cloche d'embrayage et une servocommande pilotant hydrauliquement les embrayages du mécanisme d'embrayage. Dans ce document, le module de transmission de couple est en partie logé dans la cloche d'embrayage du mécanisme d'embrayage et il est prévu un passage dans la cloche d'embrayage pour relier ce module de transmission de couple mécaniquement et hydrauliquement à la servocommande. Un tel module de transmission de couple est formé par un flasque et un couvercle délimitant ensemble une chambre d'embrayage logeant les embrayages du mécanisme d'embrayage.

Des pompes hydrauliques sont prévues pour être montées sur le module de transmission de couple du mécanisme d'embrayage. Pour assurer la distribution du fluide hydraulique sous pression délivré par les pompes hydrauliques, il est prévu que les pompes hydrauliques soient raccordées à un dispositif de distribution du fluide hydraulique formé dans le flasque du module de transmission de couple. Plus particulièrement, de telles pompes hydrauliques raccordées au dispositif de distribution du fluide hydraulique du module de transmission de couple sont formées par une première pompe hydraulique de basse pression destinée à permettre, via le dispositif de distribution du fluide hydraulique, la lubrification des embrayages du mécanisme d'embrayage et une deuxième pompe hydraulique haute pression destinée à permettre, via le dispositif de distribution du fluide hydraulique, l'actionnement par des pistons des embrayages du mécanisme d'embrayage.

Lors de l'assemblage d'un tel mécanisme, le module de transmission de couple préalablement équipé des pompes hydrauliques est logé au moins en partie dans la cloche d'embrayage du mécanisme d'embrayage. Un tel assemblage est complexe à réaliser. En effet, dans une première étape d'assemblage, il est d'abord nécessaire de fixer les pompes hydrauliques sur le module de transmission de couple. Dans une deuxième étape d'assemblage, la cloche d'embrayage du mécanisme d'embrayage est fixée à une transmission d'un véhicule automobile. Dans une troisième étape d'assemblage, le module de transmission de couple est logé au moins en partie dans la cloche d'embrayage du mécanisme d'embrayage pour être fixé, d'une part, sur la cloche d'embrayage et sur la servocommande.

De plus, cette solution présentée dans ce document implique de nombreuses modifications structurelles du module de transmission de couple. En l'occurrence, le flasque du module de transmission de couple est adapté pour porter les pompes hydrauliques ainsi que le dispositif de distribution d'huile raccordé à ces pompes hydrauliques. Ces modifications structurelles du module de transmission de couple contribuent à l'encombrement du module de transmission de couple, lorsqu'il est logé dans la cloche d'embrayage du mécanisme d'embrayage.

Un autre exemple de pompe hydraulique pour mécanisme d'embrayage à double embrayages humides est connu du document DE 10 2008 005239 A1.

La présente invention a pour but de pallier à au moins l'un des inconvénients précités et de proposer un agencement particulier du mécanisme d'embrayage permettant de réaliser un assemblage simplifié tout en réduisant les contraintes et les coûts de fabrication du mécanisme d'embrayage.

A cet effet, l'invention a pour objet une pompe hydraulique pour mécanisme d'embrayage d'une transmission de véhicule, la pompe hydraulique comprenant un corps dans lequel sont formées une chambre, une ouverture d'entrée par laquelle un fluide hydraulique est apte à entrer dans la chambre, et une ouverture de sortie par laquelle le fluide hydraulique est apte à sortir de la chambre, la chambre recevant au moins une roue hydraulique de la pompe hydraulique, l'ouverture d'entrée et l'ouverture de sortie débouchant chacune sur la chambre du corps. Dans cette invention, le corps de la pompe hydraulique est délimité par un contour extérieur sur lequel est formée au moins une rainure périphérique configurée pour recevoir un joint, le joint étant destiné à assurer une étanchéité de contact entre, d'une part, le corps de la pompe hydraulique et, d'autre part, une interface de connexion hydraulique du mécanisme d'embrayage.

On comprendra que la pompe hydraulique selon l'invention est destinée à équiper un mécanisme d'embrayage de type humide, c'est-à-dire un mécanisme d'embrayage alimenté par le fluide hydraulique sous pression telle que de l'huile pour permettre de lubrifier ou d'actionner au moins un embrayage du mécanisme d'embrayage, selon l'utilisation souhaitée. Lorsqu'un tel mécanisme d'embrayage est de type à double embrayages, une pompe de basse pression permet de lubrifier, via l'interface de connexion hydraulique, les embrayages du mécanisme d'embrayage et une pompe de haute pression permet d'actionner, via l'interface de connexion hydraulique, les embrayages du mécanisme d'embrayage.

L'interface de connexion hydraulique est destinée à collaborer avec la pompe hydraulique de l'invention, notamment en assurant une canalisation du fluide hydraulique vers et depuis la pompe hydraulique. L'interface de connexion hydraulique est destinée à loger la pompe hydraulique selon l'invention.

On comprendra également que l'interface de connexion hydraulique permet la distribution du fluide hydraulique vers au moins un embrayage du mécanisme d'embrayage.

Grâce à une telle pompe hydraulique, il est possible de simplifier l'assemblage du mécanisme d'embrayage. En effet, la pompe hydraulique, plus particulièrement son corps peut être logé dans l'interface de connexion hydraulique entre une première partie et une deuxième partie de l'interface de connexion hydraulique. Ainsi, dans le cas d'un mécanisme à double embrayage, il est possible de délivrer une interface de connexion hydraulique comprenant les pompes hydrauliques préalablement montées dans cette interface de connexion hydraulique. Ainsi, lorsque le mécanisme d'embrayage est livré chez un client - tel qu'un constructeur automobile - , il n'est plus nécessaire de procéder à l'assemblage des pompes hydrauliques avant de loger le module de transmission de couple dans la cloche d'embrayage.

Avantageusement, la pompe hydraulique est une pompe à engrenages. La roue hydraulique est alors un premier engrenage de cette pompe. La chambre du corps de la pompe hydraulique est alors configurée en dimension pour recevoir les engrenages de cette pompe.

Avantageusement, la pompe hydraulique comprend au moins la roue hydraulique.

Avantageusement, l'ouverture d'entrée et l'ouverture de sortie sont en regard l'une de l'autre.

En fonctionnement, les engrenages d'une telle pompe hydraulique sont entraînés en rotation et génèrent alors, par dépression, une aspiration du fluide hydraulique depuis l'ouverture d'entrée pour le diriger vers l'ouverture de sortie du corps de la pompe hydraulique.

Avantageusement, une première rainure périphérique et une deuxième rainure périphérique sont formées sur le contour extérieur du corps de la pompe hydraulique, la première rainure périphérique et la deuxième rainure périphérique étant configurées pour recevoir respectivement un premier joint et un deuxième joint, le premier joint et le deuxième joint étant destinés à assurer une étanchéité de contact entre le corps de la pompe hydraulique et une interface de connexion hydraulique du mécanisme d'embrayage.

On comprendra que, lorsque le corps de la pompe hydraulique est logé dans l'interface de connexion hydraulique entre la première partie et la deuxième partie de l'interface, le premier joint est destiné à assurer une étanchéité de contact entre le corps de la pompe hydraulique et la première partie de l'interface de connexion hydraulique, et le deuxième joint est destiné à assurer une étanchéité de contact entre le corps de la pompe hydraulique et la deuxième partie de l'interface de connexion hydraulique.

Il est envisagé que la première partie de l'interface de connexion hydraulique soit formée conjointement avec une cloche d'embrayage du mécanisme d'embrayage, alors que la deuxième partie de l'interface de connexion hydraulique ferme la première partie de l'interface de connexion hydraulique.

La cloche d'embrayage du mécanisme d'embrayage peut être configurée pour recevoir un module de transmission de couple du mécanisme d'embrayage. Un tel module de transmission de couple est formé par un flasque et un couvercle délimitant ensemble une chambre d'embrayage logeant au moins un embrayage du mécanisme d'embrayage.

Avantageusement, le centre de l'ouverture d'entrée et le centre de l'ouverture de sortie du corps passent par un même axe des ouvertures.

Il peut être prévu que l'ouverture d'entrée soit de diamètre supérieur au diamètre de l'ouverture de sortie. En variante, l'ouverture d'entrée peut être de diamètre égal au diamètre de l'ouverture de sortie. Lorsque l'ouverture d'entrée et l'ouverture de sortie sont de diamètre égal, l'interface de connexion hydraulique peut comprendre des moyens de régulation de débit du fluide hydraulique.

Pour loger le corps de la pompe hydraulique dans l'interface de connexion hydraulique, il peut être prévu que, la première partie de l'interface de connexion hydraulique comprenne un premier logement pour recevoir une première partie du corps de la pompe hydraulique et la deuxième partie de l'interface de connexion hydraulique comprenne un deuxième logement pour recevoir une deuxième partie du corps de la pompe hydraulique, les première et deuxième parties du corps de la pompe hydraulique formant ensemble le corps.

Selon une caractéristique, le corps de la pompe hydraulique comprend une base cylindrique dans laquelle sont formées la chambre, l'ouverture d'entrée et l'ouverture de sortie. La base cylindrique peut comprendre un contour extérieur sur lequel sont formées la première rainure périphérique et la deuxième rainure périphérique recevant respectivement le premier joint et le deuxième joint.

Le premier joint permet de réaliser une étanchéité de contact entre la base cylindrique du corps et la première partie de l'interface de connexion hydraulique alors que le deuxième joint permet de réaliser une étanchéité de contact entre la base cylindrique du corps et la deuxième partie de l'interface de connexion hydraulique.

De façon avantageuse, l'ouverture d'entrée et l'ouverture de sortie sont formées sur le corps de la pompe hydraulique entre la première rainure et la deuxième rainure. Dans cette configuration des ouvertures du corps, on comprendra que le fluide hydraulique acheminé vers la chambre, et le fluide hydraulique acheminé à l'extérieur de la chambre est limité dans son déplacement par le premier joint et le deuxième joint. Plus particulièrement, le premier joint et le deuxième joint sont destinés à assurer l'étanchéité en aspiration et refoulement du fluide sans générer d'émulsion et de perte de charge vers au moins l'embrayage du mécanisme d'embrayage.

Avantageusement, la base cylindrique du corps de la pompe hydraulique est de forme circulaire. Dans ce cas, la première rainure périphérique et la deuxième rainure périphérique sont également de forme circulaire.

Selon une particularité de ce mode de réalisation, le corps de la pompe hydraulique comprend un couvercle fermant sa base cylindrique. Ce couvercle permet de former un ensemble préassemblé de la pompe hydraulique pouvant comprendre la roue hydraulique.

Selon cette particularité, il est envisagé que le corps de la pompe hydraulique soit formé par la base cylindrique et le couvercle. La base cylindrique peut alors comprendre la première rainure du corps et le couvercle peut comprendre la deuxième rainure du corps.

Selon une autre particularité, la pompe hydraulique comprend des moyens de fixation du corps de pompe hydraulique configurés pour coopérer avec des moyens de fixation complémentaires de l'interface de connexion hydraulique. Lorsque les moyens de fixation du corps de pompe hydraulique coopèrent avec les moyens complémentaires de fixation de l'interface de connexion hydraulique. On comprendra que le corps de la pompe hydraulique est solidarisé à l'interface de connexion hydraulique. Ces moyens de fixation du corps de la pompe hydraulique et ces moyens de fixation complémentaires de l'interface de connexion hydraulique pour être formés par des moyens d'encliquetage ou encore par des rivets, par exemple. Ces moyens de fixation du corps de la pompe hydraulique sont avantageusement formés sur la base cylindrique du corps.

Avantageusement, les moyens de fixation du corps de pompe hydraulique prennent la forme d'alésages formés dans le corps de la pompe hydraulique et les moyens de fixation complémentaires de l'interface de connexion hydraulique prennent la forme de trous de fixation, les alésages du corps étant en regard des trous de fixation de l'interface de connexion hydraulique et sont respectivement configurés pour recevoir une vis de fixation. Lorsque le corps de la pompe hydraulique comprend une base cylindrique, les moyens de fixation sont formés dans cette base cylindrique. Lorsque le corps de la pompe hydraulique comprend le couvercle, le couvercle comprend des trous de passage en regard des trous de fixation de l'interface de connexion hydraulique pour être chacun traversé par l'une des vis de fixation logée dans un alésage du corps de la pompe hydraulique.

On va maintenant décrire une série de caractéristiques de la pompe hydraulique pouvant être prises seules ou en combinaison les unes avec les autres.

Ainsi, dans le cas d'une pompe à engrenages, la chambre peut être formée par une première portion et une deuxième portion, la première portion permettant l'entraînement en rotation de la roue hydraulique, à savoir le premier engrenage et la deuxième portion permettant l'entraînement en rotation d'un deuxième engrenage de la pompe hydraulique.

La pompe hydraulique peut également comprendre un arbre d'entraînement s'étendant le long d'un axe de rotation pour, d'un côté, être logé dans le corps de la pompe hydraulique afin d'entraîner en rotation la roue hydraulique autour de l'axe de rotation de l'arbre d'entraînement et pour, d'un autre côté, émerger du corps de la pompe hydraulique pour venir en prise avec un pignon d'entraînement.

Le pignon d'entraînement peut être configuré pour être couplé à une courroie dentée solidarisée au module de transmission de couple du mécanisme d'embrayage.

Il est envisagé que l'axe de rotation de l'arbre d'entraînement soit configuré pour être parallèle à un axe de rotation du mécanisme d'embrayage. Il est aussi prévu que l'axe de rotation de l'arbre d'entraînement soit perpendiculaire à l'axe des ouvertures.

L'arbre d'entraînement de la pompe hydraulique peut être configuré pour s'étendre au-delà de l'interface de connexion hydraulique. Plus particulièrement, l'arbre d'entraînement de la pompe hydraulique peut être configuré pour traverser l'interface de connexion hydraulique et s'étendre au-delà de cette dernière depuis un orifice d'entrée de l'interface de connexion hydraulique.

Selon plusieurs configurations envisagées de l'arbre d'entraînement pouvant être prises seules ou en combinaison les unes des autres, il peut être envisagé que :
- l'arbre d'entraînement soit configuré pour traverser la première partie de l'interface de connexion hydraulique pour s'étendre au-delà de cette première partie depuis un orifice d'entrée de la première partie du côté opposé à la deuxième partie de l'interface de connexion hydraulique,
- lorsque la première partie est formée conjointement avec la cloche d'embrayage, l'arbre d'entraînement soit configuré pour traverser la première partie et émerger à l'intérieur de la cloche d'embrayage,
- l'arbre d'entraînement de la pompe hydraulique soit prévu pour traverser un orifice d'entrée du couvercle du corps de la pompe cylindrique,
- l'orifice d'entrée de la première partie et l'orifice d'entrée du couvercle soient alignés l'un avec l'autre,
- le couvercle comprenne une saillie circulaire prévue pour être logée dans l'orifice d'entrée de la première partie, l'orifice d'entrée du couvercle étant formé dans la saillie circulaire,
- l'arbre d'entraînement soit solidarisé, d'une part, avec la roue hydraulique, et d'autre part, avec le pignon d'entraînement,
- l'arbre d'entraînement émergeant du corps de la pompe hydraulique comprenne une partie de forme conique pour recevoir une partie complémentaire de forme conique du pignon d'entraînement de sorte à être en prise l'une avec l'autre,
- un moyen de maintien de la pompe hydraulique soit prévu pour maintenir le pignon d'entraînement,
- le moyen de maintien pouvant être formé par un écrou de serrage coopérant avec une extrémité filetée de l'arbre d'entraînement,
- l'extrémité filetée étant consécutive à la partie de forme conique de l'arbre d'entraînement. En d'autres termes, l'extrémité filetée est réalisée dans le prolongement de la partie de forme conique de l'arbre d'entraînement.

En pratique, lorsque l'arbre d'entraînement est configuré pour traverser la première partie de l'interface de connexion hydraulique pour s'étendre au-delà de cette première partie depuis un orifice d'entrée de la première partie du côté opposé à la deuxième partie de l'interface de connexion hydraulique, et lorsque la première partie est conjointement avec la cloche d'embrayage, on comprendra que l'arbre d'entraînement émerge dans la partie de la cloche d'embrayage logeant le module de transmission. Pour entraîner la pompe hydraulique, le pignon d'entraînement peut être couplé à une courroie dentée solidarisée au module de transmission de couple du mécanisme d'embrayage.

Pour assurer un fonctionnement en haute pression, le corps de la pompe hydraulique peut être dimensionné pour un fonctionnement en haute pression. Plus particulièrement, la chambre du corps de la pompe hydraulique peut être dimensionnée pour un fonctionnement en haute pression. On définit le fonctionnement en haute pression de la pompe comme étant compris entre 2 bar et 35 bar.

Pour assurer un fonctionnement en basse pression, le corps de la pompe hydraulique peut être dimensionné pour un fonctionnement en basse pression. Plus particulièrement, la chambre du corps de la pompe hydraulique peut être dimensionnée pour un fonctionnement en basse pression. On définit le fonctionnement en basse pression de la pompe comme étant compris entre 2 bar et 15 bar.

On comprendra que le dimensionnement de la pompe hydraulique est également réalisé par le dimensionnement de la roue hydraulique logée dans la chambre du corps de la pompe hydraulique. Lorsque la pompe hydraulique est une pompe à engrenages, les engrenages de cette pompe sont dimensionnés à cet effet.

Selon un aspect, l'invention a pour objet une interface de connexion hydraulique pour mécanisme d'embrayage d'une transmission de véhicule, l'interface de connexion hydraulique comprenant au moins une pompe hydraulique selon l'une des caractéristiques précédentes.

Avantageusement, l'interface de connexion hydraulique comprend deux pompes hydrauliques selon l'une des caractéristiques précédentes.

Avantageusement, une pompe de basse pression permet de lubrifier au moins un embrayage du mécanisme d'embrayage via l'interface de connexion hydraulique et une pompe de haute pression permet d'actionner au moins l'embrayage du mécanisme d'embrayage via l'interface de connexion hydraulique.

Selon cet aspect de l'invention, le corps d'au moins la pompe hydraulique est logé dans l'interface de connexion hydraulique entre une première partie et une deuxième partie de l'interface de connexion hydraulique.

On comprendra que l'interface de connexion hydraulique permet la distribution du fluide hydraulique vers au moins un embrayage du mécanisme d'embrayage.

Selon une caractéristique de l'interface de connexion, la première partie de l'interface de connexion hydraulique comprend un premier logement pour recevoir une première partie du corps de l'au moins une pompe hydraulique et la deuxième partie de l'interface de connexion hydraulique comprend un deuxième logement pour recevoir une deuxième partie du corps de l'au moins une pompe hydraulique, les première et deuxième parties du corps de l'au moins une pompe hydraulique formant ensemble le corps.

Avantageusement, la première partie de l'interface de connexion hydraulique peut comprendre un logement pour recevoir entièrement le corps de l'au moins une pompe hydraulique.

Avantageusement, la deuxième partie de l'interface de connexion hydraulique peut comprendre un logement pour recevoir entièrement le corps de l'au moins une pompe hydraulique.

Selon une autre caractéristique de l'interface de connexion hydraulique, la première partie de l'interface de connexion hydraulique peut être formée conjointement avec une cloche d'embrayage du mécanisme d'embrayage alors que la deuxième partie de l'interface de connexion hydraulique ferme la première partie de l'interface de connexion hydraulique.

Dans une variante, la cloche d'embrayage, la première et la deuxième parties sont réalisées en une seule pièce, par exemple par moulage et/ou par usinage. La première partie comporte par exemple une jupe de la cloche d'embrayage. La deuxième partie forme en particulier une base de la cloche d'embrayage.

La cloche d'embrayage du mécanisme d'embrayage peut être configurée pour loger un module de transmission de couple du mécanisme d'embrayage. Un tel module de transmission de couple est formé par un flasque et un couvercle délimitant ensemble une chambre d'embrayage logeant au moins un embrayage du mécanisme d'embrayage.

Selon une autre caractéristique la première et la deuxième parties de l'interface de connexion hydraulique sont réalisées en une seule pièce.

Alternativement, la première et la deuxième parties de l'interface de connexion hydraulique de l'interface de connexion hydraulique forment deux pièces distinctes, un joint plan est alors par exemple disposé entre la première partie et la deuxième partie de l'interface de connexion hydraulique. Le joint plan permet d'assurer une étanchéité de contact entre la première partie et la deuxième partie.

Plus particulièrement, la première partie peut comprendre un plan d'accostage et la deuxième partie peut comprendre un plan d'accostage, le joint plan étant disposé entre le plan d'accostage de la première partie et le plan d'accostage de la deuxième partie, des conduits hydrauliques formés, d'une part, dans la première partie débouchent sur le plan d'accostage de la première partie et, d'autre part, dans la deuxième partie débouchent sur le plan d'accostage de la deuxième partie. On comprendra que les conduits formés sur la première partie et la deuxième partie de l'interface de connexion hydraulique assurent ensemble la distribution du fluide hydraulique vers au moins un embrayage du mécanisme d'embrayage. Bien entendu, on comprendra que le joint plan est détouré autour de conduits hydrauliques ou d'autres formes ménagées dans les premier et deuxième parties de l'interface de connexion hydraulique.

Un premier conduit hydraulique peut être configuré pour acheminer le fluide hydraulique vers l'ouverture d'entrée de l'au moins une pompe hydraulique.

Un deuxième conduit hydraulique peut être configuré pour diriger le fluide hydraulique depuis l'ouverture de sortie de l'au moins une pompe hydraulique.

Dans une variante, le premier conduit hydraulique et/ou le deuxième conduit hydraulique est formé entièrement dans la première partie ou dans la deuxième partie de l'interface de connexion hydraulique.

Avantageusement, la cloche d'embrayage est configurée pour être montée sur un carter de la transmission du véhicule.

Avantageusement, au moins la deuxième partie de l'interface de connexion hydraulique comprend un canal débouchant sur le deuxième conduit hydraulique. Le canal de la deuxième partie s'étend avantageusement perpendiculairement par rapport à l'ouverture d'entrée du corps et l'ouverture de sortie du corps.

Avantageusement, le canal de la deuxième partie peut être configuré pour recevoir un connecteur pouvant être reçu dans le carter de la transmission du véhicule.

Avantageusement, le connecteur logé dans le canal de la deuxième partie prend la forme d'un régulateur de pression.

Avantageusement, le canal peut être configuré pour être connecté, via la transmission, à un échangeur de chaleur du véhicule.

Avantageusement, le canal de la deuxième partie peut être configuré pour être connecté, via la transmission, à un filtre du fluide hydraulique de la transmission.

Un premier plan de connexion hydraulique de l'interface de connexion hydraulique peut être configuré pour être en correspondance d'un premier plan de connexion hydraulique d'une servocommande hydraulique. Ce premier plan de connexion hydraulique permet de connecter mécaniquement et hydrauliquement, l'interface de connexion hydraulique et la servocommande hydraulique.

Un deuxième plan de connexion hydraulique de l'interface de connexion hydraulique peut être configuré pour venir en correspondance d'un deuxième plan de connexion hydraulique de la transmission. Ce deuxième plan de connexion hydraulique permet de connecter mécaniquement et hydrauliquement, l'interface de connexion hydraulique et la transmission du véhicule.

Avantageusement, le deuxième plan de connexion hydraulique de l'interface de connexion hydraulique est perpendiculaire au premier plan de connexion hydraulique de l'interface de connexion hydraulique.

Selon un autre aspect, l'invention a pour objet un mécanisme d'embrayage d'une transmission de véhicule comprend une interface de connexion hydraulique selon l'une quelconque des caractéristiques de l'aspect de l'invention portant sur l'interface de connexion hydraulique.

Selon un mode de réalisation particulier, le mécanisme d'embrayage comprend une cloche d'embrayage sur laquelle est formée en partie l'interface de connexion hydraulique.

Avantageusement, le mécanisme d'embrayage comprend un module de transmission de couple, le module de transmission de couple comprenant un flasque et un couvercle délimitant entre eux une chambre d'embrayage logeant au moins un embrayage du mécanisme d'embrayage, le module de transmission de couple étant prévu pour être au moins en partie logé dans la cloche d'embrayage.

Avantageusement, le mécanisme d'embrayage comprend une servocommande hydraulique du mécanisme d'embrayage, la servocommande hydraulique étant reliée à l'interface de connexion hydraulique par le premier plan de connexion hydraulique de l'interface de connexion hydraulique en correspondance d'un premier plan de connexion hydraulique de la servocommande hydraulique.

La servocommande peut avantageusement comprendre au moins un conduit en correspondance du premier conduit pour diriger le fluide hydraulique vers l'au moins une pompe.

Avantageusement, le mécanisme d'embrayage est du type humide.

Avantageusement, le mécanisme d'embrayage est du type à double embrayages.

Avantageusement, les embrayages sont disposés dans une configuration radiale.

Avantageusement, les embrayages sont disposés dans une configuration axiale.

Selon un autre aspect, l'invention a pour objet un ensemble de transmission comprenant le mécanisme d'embrayage selon l'une quelconque des caractéristiques de l'aspect de l'invention portant sur le mécanisme d'embrayage.

Selon un mode de réalisation, l'ensemble de transmission peut comprendre un réservoir de fluide hydraulique dans lequel est immergé au moins en partie la servocommande hydraulique.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, dans lesquels :

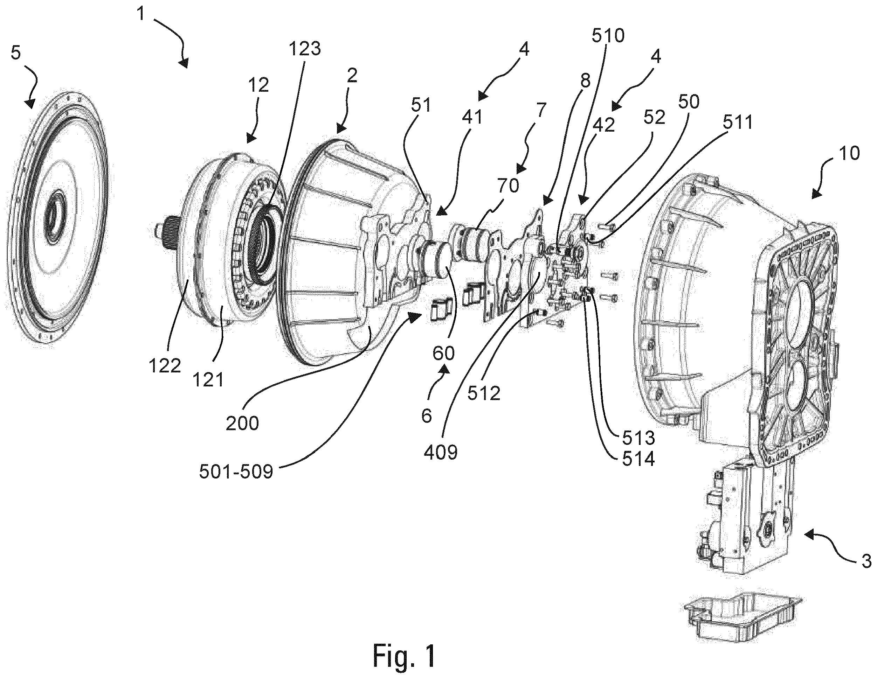

- la figure 1 illustre une vue éclatée en perspective d'un ensemble formé par un mécanisme d'embrayage et un carter d'une transmission de véhicule, le mécanisme d'embrayage comprenant principalement une cloche d'embrayage sur laquelle est formée en partie une interface de connexion hydraulique du mécanisme d'embrayage, l'interface de connexion hydraulique étant formée par une première partie et par une deuxième partie, un module de transmission de couple, une plaque de fermeture fermant la cloche d'embrayage et une servocommande hydraulique, le mécanisme d'embrayage étant destiné à être logé dans le carter de la transmission du véhicule,
- la figure 2 illustre une vue en perspective de la cloche d'embrayage formant une première partie de l'interface de connexion hydraulique selon le mode de réalisation illustré à la figure 1, la cloche d'embrayage est fermée par une deuxième partie de l'interface de connexion hydraulique,
- la figure 3A illustre une vue de la face arrière de la cloche d'embrayage représentée à la figure 2 non équipée de la deuxième partie,
- la figure 3B illustre une vue de face de la deuxième partie de l'interface de connexion hydraulique,
- la figure 4 illustre une vue en coupe de la figure 2 dans laquelle on peut voir les pompes en partie logées dans l'interface de connexion hydraulique et configurées pour émerger dans la partie de la cloche d'embrayage logeant le module de transmission de couple,
- la figure 5 illustre une vue en coupe d'une pompe reliée à un connecteur,
- la figure 6 illustre une vue en coupe d'une pompe hydraulique isolée du mécanisme d'embrayage,
- la figure 7 illustre une vue éclatée en perspective d'une interface de connexion hydraulique selon un autre mode de réalisation de l'invention,
- la figure 8 illustre une vue en perspective de la cloche d'embrayage formant l'interface de connexion hydraulique selon le mode de réalisation illustré à la figure 1, et
- la figure 9 correspond à la figure 1 pour un ensemble comportant une interface de connexion hydraulique selon le mode de réalisation de la figure 7.

Dans la suite de la description, on utilisera indifféremment : les termes « interface de connexion hydraulique » et « interface », les termes « pompe hydraulique » et « pompe », les termes « servocommande hydraulique » et « servocommande », les termes « plan de connexion hydraulique » et « plan de connexion », les termes « connecteur hydraulique » et « connecteur ».

Tel qu'illustré à la figure 1, on a représenté un ensemble formé par le mécanisme d'embrayage 1 et un carter d'une transmission 10 de véhicule. Le mécanisme d'embrayage 1 de type à double embrayage humide pour une transmission de véhicule. L'invention n'est toutefois pas limitée à un tel mécanisme d'embrayage. Le mécanisme d'embrayage 1 comprend principalement une cloche d'embrayage 2, une interface de connexion hydraulique 4 du mécanisme d'embrayage 1 formée par une première partie 41 et une deuxième partie 42 fermant le première partie 41 de l'interface 4, un module de transmission de couple 12, une plaque de fermeture 5 fermant la cloche d'embrayage 2 et une servocommande hydraulique 3. Le mécanisme d'embrayage 1 est destiné à être logé dans le carter de la transmission 10. La cloche d'embrayage 2 est prévue pour loger au moins en partie le module de transmission de couple 12. Une ouverture centrale 409 traversant l'interface 4 et la cloche d'embrayage 2 est prévue pour recevoir des arbres de transmission de la transmission. Le module de transmission de couple 12 est destiné à être monté libre en rotation dans la cloche d'embrayage 2. Un tel module de transmission de couple 12 est formé par un flasque 121 et un couvercle 122 délimitant ensemble une chambre d'embrayage logeant les embrayages du module de transmission de couple 12 du mécanisme d'embrayage 1. La première partie 41 est formée conjointement avec la cloche d'embrayage 2 et la deuxième partie 42 est destinée à venir fermer la première partie 41 de l'interface 4. On comprendra que la cloche d'embrayage 2 et la première partie 41 de l'interface 4 sont formées conjointement. En d'autres termes, la cloche d'embrayage 2 et la première partie 41 de l'interface 4 forment une même pièce monobloc. La première partie 41 peut être formée par moulage et/ou par usinage de la cloche d'embrayage 2. La première partie 41 de l'interface 4 est formée sur une face arrière de la cloche d'embrayage 2, la face arrière étant destinée à être en regard de la deuxième partie 42. Une lumière 200 est prévue dans la cloche d'embrayage 2 pour permettre un accès à une partie de la servocommande 3 depuis l'intérieur de la cloche d'embrayage 2 lorsque la servocommande 3 est reliée à l'interface 4.

La cloche d'embrayage 2 est montée sur le carter de la transmission 10 de sorte que la deuxième partie 42 est alors reliée hydrauliquement au carter de la transmission 10. Telles que représentées, des pompes hydrauliques 6, 7 du mécanisme d'embrayage 1 sont prévues pour équiper l'interface de connexion hydraulique 4. Plus particulièrement, un corps 60, 70 des pompes hydrauliques 6, 7 est logé dans l'interface 4 entre la première partie 41 et la deuxième partie 42 de l'interface 4. Une première pompe hydraulique 6 de type basse pression permet de lubrifier les embrayages logés dans le module de transmission de couple 12 du mécanisme d'embrayage 1 et une deuxième pompe hydraulique 7 de type haute pression permet d'actionner les embrayages logés dans le module de transmission de couple 12 du mécanisme d'embrayage 1. Un joint plan 8 est prévu pour être disposé entre la première partie 41 et la deuxième partie 42 de l'interface 4. Le joint plan 8 représenté disposé entre les première et deuxième parties 41, 42 de l'interface 4 assure une étanchéité de contact entre ces deux parties 41, 42 de l'interface 4.

On va maintenant décrire l'assemblage d'un tel mécanisme d'embrayage 1.

Dans une première phase d'assemblage, avantageusement réalisée avant une livraison chez un constructeur automobile, les pompes 6, 7 sont disposées par la face arrière de la cloche d'embrayage 2 pour être insérées dans la première partie 41 de l'interface de connexion hydraulique 4. Préalablement ou ultérieurement, le joint plan 8 est disposé sur la première partie 41 de l'interface 4. La première partie 41 est alors recouverte par la deuxième partie 42, qui, selon cet exemple de réalisation. La deuxième partie 42 est alors vissée par la série de premières vis de fixation 50 sur la première partie 41 de l'interface 4. On comprendra que cette première phase d'assemblage permet de former un sous-ensemble préassemblé pouvant être livré chez un client, tel qu'un constructeur automobile, sans que celui-ci n'ait à réaliser ces opérations de montage des pompes hydrauliques 6, 7 du mécanisme d'embrayage 1.

Dans une deuxième phase d'assemblage, la servocommande hydraulique 3 est alors connectée à l'interface de connexion hydraulique 4 via une première série de connecteurs hydrauliques 501-509. La cloche d'embrayage 2 et la servocommande 3 sont alors reliées hydrauliquement au carter de la transmission 10 via une deuxième série de connecteurs hydrauliques 510-514. Les arbres de transmission de la transmission du véhicule émergent, par une ouverture centrale 409 alors à l'intérieur de la cloche d'embrayage 2 du côté opposé à la première partie 41 de l'interface 4. Le module de transmission de couple 12 est ensuite inséré dans la cloche d'embrayage 2 pour être monté fixe sur cette dernière, par vissage par exemple. Chaque connecteur comprend une première rainure périphérique et une deuxième rainure périphérique recevant chacune un joint d'étanchéité de sorte à assurer une étanchéité entre chacune des parties 41, 42 de l'interface 4.

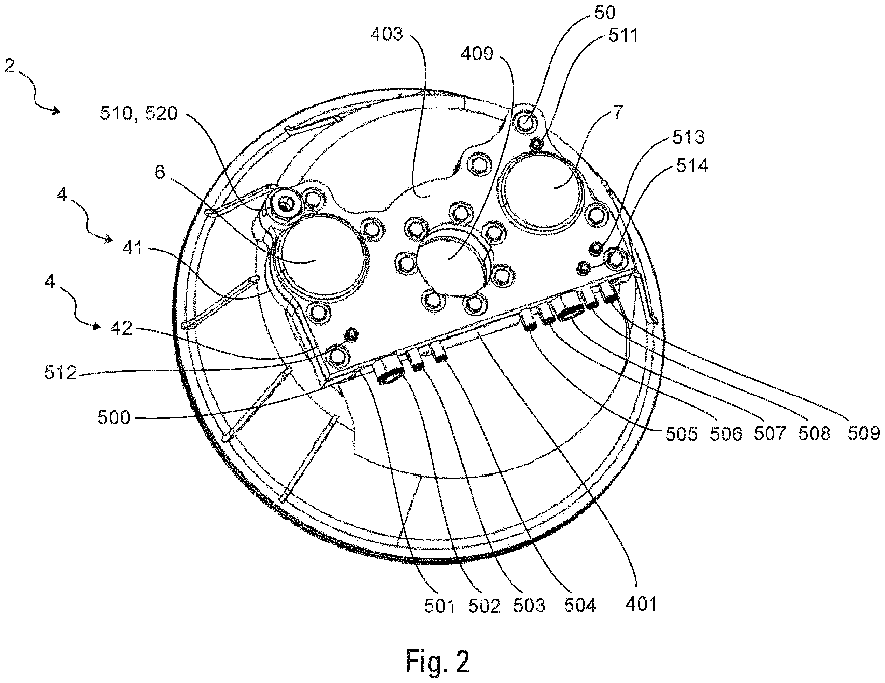

Tel qu'illustré plus en détails à la figure 2, on a représenté la cloche d'embrayage 2 sur laquelle est formée la première partie 41 de l'interface de connexion hydraulique 4. La première partie 41 et la deuxième partie 42 de l'interface 4 sont en correspondance l'une de l'autre. On a représenté un premier plan de connexion hydraulique 401 de l'interface 4. Ce premier plan de connexion 401 est configuré pour venir en correspondance d'un premier plan de connexion hydraulique 402 de la servocommande 3 illustré à la figure 1. Les premiers plans de connexion 401, 402 de l'interface 4 et de la servocommande 3 permettent de connecter mécaniquement et hydrauliquement l'interface 4 et la servocommande 3 via des premiers moyens de maintien 500 et la première série de connecteurs hydrauliques 501-509. Un deuxième plan de connexion hydraulique 403 de l'interface de connexion hydraulique 4 est configuré pour venir en correspondance d'un deuxième plan de connexion hydraulique (non représenté) formé sur le carter la transmission. Le deuxième plan de connexion hydraulique 403 est un plan de la deuxième partie 42 de l'interface 4. Les deuxièmes plans de connexion 403 de l'interface 4 et de la servocommande 3 permettent de connecter mécaniquement et hydrauliquement l'interface 4 et la transmission via la deuxième série de connecteurs hydrauliques 510-514. On notera que le premier plan de connexion 401 de l'interface connexion hydraulique 4 est perpendiculaire au deuxième plan de connexion 403 de l'interface de connexion hydraulique 4. Ainsi, la première série de connecteurs 501-509 est orientée perpendiculairement par rapport à la deuxième série de connecteurs 510-514.

L'interface de connexion hydraulique 4 comprend le corps 60 de la première pompe hydraulique 6 - logé dans l'interface 4 - destinée à lubrifier les embrayages logés dans le module de transmission de couple 12 du mécanisme d'embrayage 1 et le corps 70 de la deuxième pompe hydraulique 7 - logé dans l'interface 4 - destinée à actionner les embrayages logés dans le module de transmission de couple 12 du mécanisme d'embrayage 1 via des pistons pouvant être logé dans le module de transmission de couple 12.

La première pompe hydraulique 6 est prévue pour aspirer un fluide hydraulique depuis un premier connecteur 502 de la première série de connecteurs 501-509. Le fluide hydraulique refoulé par la première pompe hydraulique 6 est ensuite dirigé vers un premier connecteur 510 de la deuxième série de connecteurs 510-514. Le fluide hydraulique aspiré par la première pompe hydraulique 6 est alors guidé, via le premier connecteur 510 de la deuxième série de connecteurs 510-514, vers un échangeur de chaleur du véhicule afin de réguler la température du fluide hydraulique avant son insertion dans le module de transmission de couple 12. Le premier connecteur 510 de la deuxième série de connecteurs 510-514 peut prendre la forme d'un régulateur de pression 520 du fluide hydraulique tel qu'il sera décrit ultérieurement.

La deuxième pompe hydraulique 7 est prévue pour aspirer un fluide hydraulique depuis un deuxième connecteur 507 de la première série de connecteurs 501-509. Le fluide hydraulique refoulé par la deuxième pompe hydraulique 7 est ensuite dirigé vers un deuxième connecteur 511 de la deuxième série de connecteurs 510-514. Le fluide hydraulique aspiré par la deuxième pompe hydraulique 7 est alors guidé, via le deuxième connecteur 511 de la deuxième série de connecteurs 510-514, vers un filtre de fluide hydraulique de la transmission avant son insertion dans le module de transmission de couple 12.

Un troisième connecteur 512 de la deuxième série de connecteurs 510-514 permet de récupérer le fluide hydraulique refoulé par la pompe basse pression après son passage dans l'échangeur de chaleur et un quatrième connecteur 513 de la deuxième série de connecteurs 510-514 permet de récupérer le fluide hydraulique refoulé par la pompe haute pression après son passage par le filtre de la transmission. Un quatrième connecteur 514 de la deuxième série de connecteurs 510-514 est également prévu pour diriger du fluide hydraulique vers un accumulateur de pression de la transmission.

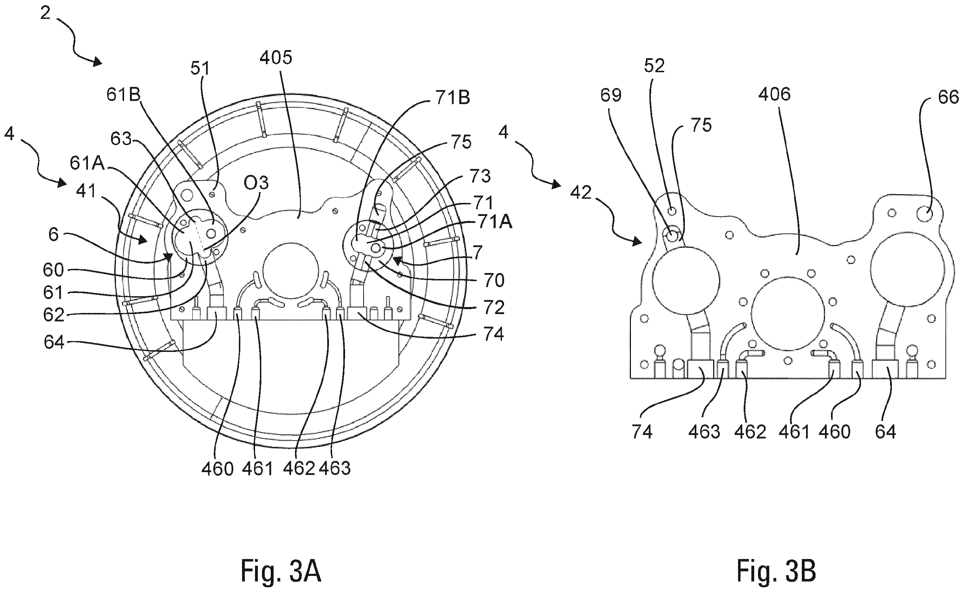

Tel qu'illustré à la figure 3A, on a représenté une vue de la face arrière de la cloche d'embrayage 2 sur laquelle est formée la première partie 41 de l'interface de connexion hydraulique 4. On a également retiré la deuxième partie 42 de l'interface de connexion hydraulique 4, la série de premières vis de fixation 50 de la deuxième partie 42 sur la première partie 41, ainsi que la première série de connecteurs hydrauliques 501-509 et la deuxième série de connecteurs hydrauliques 510-514. La deuxième partie 42 de l'interface 4 est représentée à la figure 3B par sa face en correspondance de la première partie 41.

A la figure 3A, chaque pompe 6, 7 comprend un corps 60, 70 dans lequel sont formées une chambre 61, 71, une ouverture d'entrée 62, 72 destinée à acheminer un fluide hydraulique vers la chambre 61, 71, et une ouverture de sortie 63, 73 destinée à diriger le fluide hydraulique à l'extérieur de la chambre 61, 71. Pour chaque pompe 6, 7, la chambre 61, 71 du corps 60, 70 reçoit au moins une roue hydraulique (non représentée) de la pompe 6, 7 correspondante. On notera que la chambre 61 de la première pompe 6 est de dimension supérieure à la chambre 71 de la deuxième pompe 7, ceci pour assurer leur fonctionnement respectif en basse pression et en haute pression. On comprendra que l'intérêt d'un dimensionnement différent des chambres 61, 71 des pompes 6, 7 vient du fait que le fluide hydraulique est issu d'un même réservoir de fluide hydraulique (non représenté). Pour chaque pompe 6, 7, l'ouverture d'entrée 62, 72 et l'ouverture de sortie 63, 73 sont en regard l'une de l'autre et débouchent chacune sur la chambre 61, 71 du corps 60, 70. Dans ce mode de réalisation, les pompes 6, 7 sont des pompes à engrenages, la roue hydraulique est alors un premier engrenage de cette pompe. La chambre 61, 71 de chaque pompe 6, 7 est dimensionnée pour recevoir des engrenages. Plus particulièrement, la chambre 61, 71 de chaque pompe 6, 7 est formée par une première portion 61A, 71A et une deuxième portion 61B, 71B, la première portion 61A, 71A permettant l'entraînement en rotation de la roue hydraulique, à savoir le premier engrenage et la deuxième portion 61B, 71B permettant l'entraînement en rotation d'un deuxième engrenage de la pompe hydraulique.

Plus particulièrement, la première portion 61A, 71A et la deuxième portion 61B, 71B de la chambre 61, 71 comprennent respectivement une section de forme en demi-cercle reliées l'une à l'autre par des sections linéaires.

L'insertion du fluide hydraulique dans le module de transmission de couple 12 est réalisée par une série de gorges 460-463, illustrées aux figures 3A et 3B, formés en partie sur la première partie 41 et sur la deuxième partie 42 de l'interface 4 et prévues à cet effet.

On comprendra que, le corps 60, 70 de la pompe 6, 7 correspondante est configuré pour être logé entre la première partie 41 et la deuxième partie 42 de l'interface 4. En fonctionnement, la roue hydraulique est entraînée en rotation et génère par dépression une aspiration du fluide hydraulique depuis l'ouverture d'entrée 62, 72 de chaque pompe 6, 7 en vue de diriger ce fluide vers l'ouverture de sortie 63, 73 du corps 60, 70 de la pompe 6, 7 correspondante. On notera que le corps 60, 70 de chaque pompe 6, 7 correspondante est formé de sorte que le centre de l'ouverture d'entrée 62, 72 et le centre de l'ouverture de sortie 63, 73 du corps 60, 70 passent par un même axe des ouvertures O3. Dans l'exemple illustré, on notera que l'axe des ouvertures O3 représente la direction d'écoulement du fluide hydraulique en entrée et en sortie du corps de la pompe 6, 7.

En référence aux figures 3A et 3B, la première partie 41 comprend un plan d'accostage 405 et la deuxième partie 42 comprend un plan d'accostage 406. Des conduits hydrauliques 64, 74, 75 formés, d'une part, dans la première partie 41 débouchent sur le plan d'accostage 405 de la première partie 41 et, d'autre part, dans la deuxième partie 42 débouchent sur le plan d'accostage 406 de la deuxième partie 42. On comprendra que les plans d'accostage 405, 406 des premier et deuxième parties 41, 42 de l'interface 4 permettent ensemble la distribution du fluide hydraulique, via les conduits 64, 74, 75, vers les embrayages logés dans le module de transmission de couple 12 du mécanisme d'embrayage 1. On notera que le plan d'accostage 405 de la première partie 41 et le plan d'accostage 406 de la deuxième partie 42 sont parallèles l'un à l'autre. Le joint plan 8 est alors disposé entre le plan d'accostage 405 de la première partie 41 et le plan d'accostage 406 de la deuxième partie 42.

Pour chaque pompe 6, 7, un premier conduit hydraulique 64, 74 est configuré pour acheminer le fluide hydraulique vers l'ouverture d'entrée 62, 72 de la pompe 6, 7 correspondante.

Pour acheminer le fluide hydraulique vers la première pompe 6, on comprendra que le premier conduit hydraulique 64 associé à la première pompe 6 débouche sur le premier connecteur 502 de la première série de connecteurs 501-509. Pour acheminer le fluide hydraulique vers la deuxième pompe 7, on comprendra que le premier conduit hydraulique 74 associé à la deuxième pompe 7 débouche sur le deuxième connecteur 507 de la première série de connecteurs 501-509. Les premiers conduits hydrauliques 64, 74 ont chacun une portion à leur entrée débouchant sur le premier plan de connexion 401 de l'interface 4 prévue pour recevoir le premier connecteur 502 et le deuxième connecteur 507 de la première série de connecteurs 501-509.

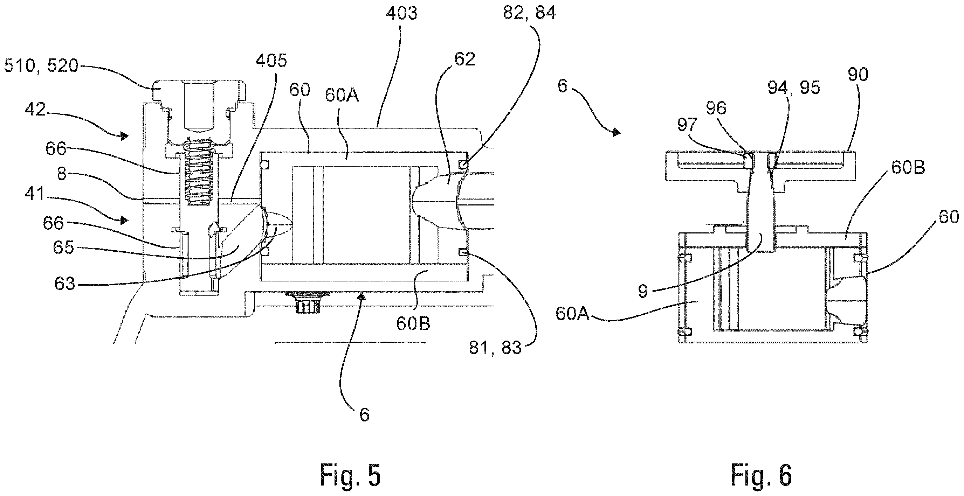

Tel qu'illustré à la figure 5, pour refouler le fluide hydraulique depuis la première pompe 6, un deuxième conduit hydraulique 65 est formé entièrement dans la première partie 41. Le deuxième conduit hydraulique 65 associé à la première pompe 6 ainsi formé est configuré pour diriger le fluide hydraulique depuis l'ouverture de sortie 63 de la pompe 6 vers le premier connecteur 510 de la deuxième série de connecteurs 510-514.

Plus particulièrement, en ce qui concerne la première pompe 6, un canal 66 formé depuis le deuxième plan de connexion 403 de la deuxième partie 42 traverse, à la fois, la première partie 41 et la deuxième partie 42 de l'interface 4 pour permettre de déboucher sur le deuxième conduit 65 associé à la première pompe 6. Ce canal 66 permet de loger le régulateur de pression 520 associé à la première pompe 6. Le deuxième conduit 65 associé à la première pompe 6 est formé dans la première partie 41 de l'interface 4 en étant incliné par rapport au plan d'accostage 405 de la première partie 41 de l'interface 4 de sorte à déboucher à une extrémité inférieure du canal 66.

En référence aux figures 3A et 3B, pour refouler le fluide hydraulique depuis la deuxième pompe 7, un deuxième conduit hydraulique 75 est configuré pour diriger le fluide hydraulique depuis l'ouverture de sortie 73 de la pompe 7 vers le deuxième connecteur 511 de la deuxième série de connecteurs 510-514. Pour cela, un canal 69 traverse la deuxième partie 42 de l'interface 4 depuis le deuxième plan de connexion 403 pour déboucher sur le deuxième conduit hydraulique 75 de la deuxième pompe 7. Ce canal 69 est prévu pour recevoir le deuxième connecteur 511 de la deuxième série de connecteurs 510-514.

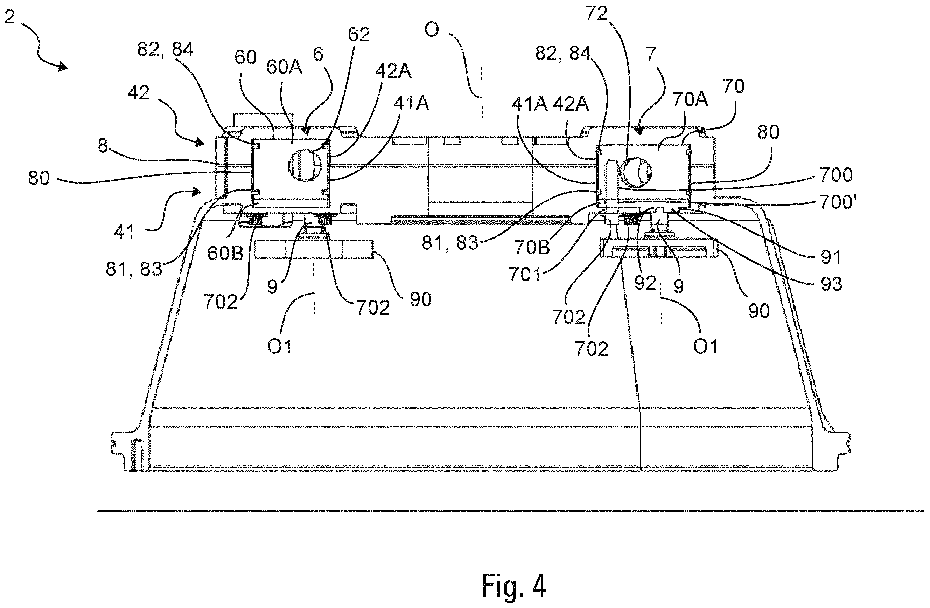

Comme cela est illustré à la figure 4, pour loger chaque pompe 6, 7 dans l'interface de connexion hydraulique 4, la première partie 41 de l'interface 4 comprend un premier logement 41A pour recevoir une première partie du corps 60, 70 de la pompe 6, 7 correspondante et la deuxième partie 42 de l'interface 4 comprend un deuxième logement 42A pour recevoir une deuxième partie du corps 60, 70 de la pompe 6, 7 correspondante, les première et deuxième parties du corps 60, 70 de la pompe formant ensemble le corps 60, 70. On comprendra alors que le corps 60, 70 de chaque pompe 6, 7 est de forme en correspondance avec le premier et deuxième logements 41A, 42A de l'interface 4.

On va maintenant décrire plus particulièrement le corps 60, 70 de chaque pompe 6, 7. Le corps 60, 70 de chaque pompe 6, 7 comprend une base cylindrique 60A, 70A de forme circulaire dans laquelle est formée la chambre 61, 71. Le corps 60, 70 de chaque pompe 6, 7 comprend de plus un couvercle 60B, 70B fermant sa base cylindrique 60A, 70A. La base cylindrique 60A, 70A comprend sur un contour extérieur 80 une première rainure périphérique 81 et une deuxième rainure périphérique 82 recevant respectivement un premier joint 83 et un deuxième joint 84. Alternativement ou de manière complémentaire, l'une des rainures périphériques 82, 83 peut être formée sur une périphérie externe du couvercle 60B. Le premier joint 83 et le deuxième joint 84 de la pompe 6, 7 correspondante permettent d'assurer une étanchéité de contact entre, d'une part, le corps 60, 70 de la pompe 6, 7 et, d'autre part, les parties 41, 42 de l'interface 4 logeant le corps 60, 70 de la pompe 6, 7. Plus particulièrement, le premier joint 83 et le deuxième joint 84 sont destinés à assurer l'étanchéité en aspiration et refoulement du fluide sans générer d'émulsion et de perte de charge vers les embrayages du mécanisme d'embrayage. L'ouverture de sortie 63, 73 de la pompe 6, 7 correspondante peut comprendre un joint d'étanchéité pour éviter d'envoyer le fluide hydraulique vers l'aspiration, c'est-à-dire vers l'ouverture d'entrée 62, 72 de la pompe 6, 7 correspondante.

Plus particulièrement, pour chaque pompe 6, 7, on notera que le premier joint 83 permet de réaliser une étanchéité de contact entre la base cylindrique 60A, 70A du corps 60, 70 et la première partie 41 de l'interface 4, alors que le deuxième joint 84 permet de réaliser une étanchéité de contact entre la base cylindrique 60A, 70A du corps 60, 70 et la deuxième partie 42 de l'interface 4. En référence aux figures 3A et 4, on comprendra que l'ouverture d'entrée 62, 72 et l'ouverture de sortie 63, 73 sont formées sur le corps 60, 70 de chaque pompe 6, 7 entre la première rainure périphérique 81 et la deuxième rainure périphérique 82. Cette configuration permet avantageusement de limiter l'expansion du fluide hydraulique vers l'ouverture d'entrée 62, 72.

Lorsque le corps 60, 70 de chaque pompe 6, 7 est logé dans les premier et deuxième logements 41A, 42A de l'interface 4, des moyens de fixation 700 de la pompe 6, 7 permettent de solidariser le corps 60, 70 de la pompe 6, 7 correspondante avec l'interface 4. Dans le mode de réalisation illustré, ces moyens de fixation 700 du corps 60, 70 de la pompe 6, 7 correspondante sont configurés pour coopérer avec des moyens de fixation complémentaires 701 de l'interface 4. Plus particulièrement, ces moyens de fixation 700 sont formés sur la base cylindrique 60A, 70A du corps 60, 70 de la pompe 6, 7 correspondante et prennent la forme d'alésages formés dans le corps 60, 70 de la pompe et les moyens de fixation complémentaires 701 de l'interface de connexion hydraulique 4 prennent la forme de trous de fixation, les alésages du corps 60, 70 étant en regard des trous de fixation de l'interface de connexion hydraulique 4 et sont respectivement configurés pour recevoir une vis de fixation 702. De façon complémentaire, le couvercle 60B, 70B de la pompe 6, 7 correspondante comprend des trous de passage 700' en regard des trous de fixation de l'interface de connexion hydraulique 4 pour être chacun traversé par l'une des vis de fixation 702 logée dans un alésage du corps 60, 70 de la pompe hydraulique. Pour chacune des pompes 6, 7, il est prévu par exemple deux vis de fixation 702.

Tel qu'illustré à la figure 4, on comprendra que, dans ce mode de réalisation, les pompes 6, 7 sont montées sur la cloche d'embrayage 2 depuis la face arrière de cette dernière alors que les vis de fixation 702 pénètrent le corps 60, 70 de la pompe concernée depuis l'intérieur de la cloche d'embrayage 2 logeant le module de transmission de couple 12.

Pour chaque pompe 6, 7, un arbre d'entraînement 9 de la pompe 6, 7 s'étend le long d'un axe de rotation O1 pour, d'un côté, être logé dans le corps 60, 70 de la pompe 6, 7 afin d'entraîner en rotation la roue hydraulique autour de l'axe de rotation O1 de l'arbre d'entraînement 9 et pour, d'un autre côté, émerger du corps 60, 70 de la pompe 6, 7 pour venir en prise avec un pignon d'entraînement 90. Le pignon d'entraînement 90 est configuré pour être couplé à une courroie dentée 123 solidarisée au module de transmission de couple 12 du mécanisme d'embrayage. On comprendra que lorsque le module de transmission de couple 12 est entraîné en rotation, son mouvement de rotation entraîne le pignon d'entraînement 90 de la pompe 6, 7. Pour cela, l'arbre d'entraînement 9 de la pompe concerné est configuré pour s'étendre au-delà de l'interface de connexion hydraulique 4 et émerger, depuis un orifice d'entrée 91 de la première partie 41 de l'interface 4 et un orifice d'entrée 92 du couvercle 60B, 70B de la pompe concernée, à l'intérieur de la cloche d'embrayage 2 logeant le module de transmission de couple 12. L'axe de rotation O1 de l'arbre d'entraînement 9 est ainsi parallèle à un axe de rotation O des embrayages logés dans le module de transmission de couple 12. On notera que l'axe de rotation O1 de l'arbre d'entraînement 9 est alors perpendiculaire à l'axe des ouvertures O3 du corps illustré à la figure 3A.

Tel que représenté à la figure 4, le couvercle 60B, 70B de chaque pompe 6, 7 comprend une saillie circulaire 93 prévue pour être logée dans l'orifice d'entrée 91 de la première partie 41 de l'interface 4. Dans ce mode de réalisation, l'orifice d'entrée 92 du couvercle 60B, 70B est formé dans la saillie circulaire 93 de sorte que l'orifice d'entrée 92 du couvercle 60B, 70B et l'orifice d'entrée 91 de l'interface 4 soient alignés. Cette saillie 93 permet de former un épaulement circulaire entre le corps 60, 70 de la pompe 6, 7 correspondante et la première partie 41 de l'interface 4. On comprendra que la figure 4 illustre une vue en coupe dans laquelle seule la saillie 93 du couvercle 70B de la pompe 7 est représentée. On comprendra également que les saillies 93 forment un moyen de positionnement et de centrage de chaque pompe 6, 7 sur la première partie 41 de l'interface 4.

Pour entraîner la roue hydraulique et transmettre un couple à cette dernière, l'arbre d'entraînement 9 est solidarisé, d'une part, avec la roue hydraulique, et d'autre part, avec le pignon d'entraînement 90.

Tel que représenté à la figure 6 pour la première pompe 6, du côté du pignon d'entraînement 90, l'arbre d'entraînement 9 émergeant du corps 60 de la première pompe hydraulique 6 comprend une partie de forme conique 94 pour recevoir une partie complémentaire de forme conique 95 du pignon d'entraînement 90 de sorte à être en prise l'une avec l'autre. Un moyen de maintien 97 de la pompe hydraulique 6 formé par un écrou de serrage est prévu pour maintenir le pignon d'entraînement 90. L'écrou est prévu pour coopérer avec une extrémité filetée 96 de l'arbre d'entraînement 9. L'extrémité filetée 96 est consécutive à la partie de forme conique 94 de l'arbre d'entraînement 9, ceci pour assurer un bon maintien du pignon d'entraînement 90. On comprendra qu'il en est de même pour la deuxième pompe 7.

L'arbre d'entraînement 9 comprend un moyen de liaison pivot (non représenté). Un tel moyen de liaison pivot peut être formé par un roulement. Une telle liaison pivot peut comprendre des moyens d'étanchéité pour empêcher le fluide hydraulique contenu dans la chambre 60, 70 d'une pompe 6, 7 de s'écouler en dehors de la chambre 60, 70 par l'arbre d'entraînement 9.

Dans ce mode de réalisation, le moyen de liaison pivot est configuré pour en partie être solidarisé au couvercle 60B, 70B du corps 60, 70 de la pompe hydraulique 6, 7 en traversant l'orifice d'entrée 92 du couvercle 60B, 70B du corps 60, 70.

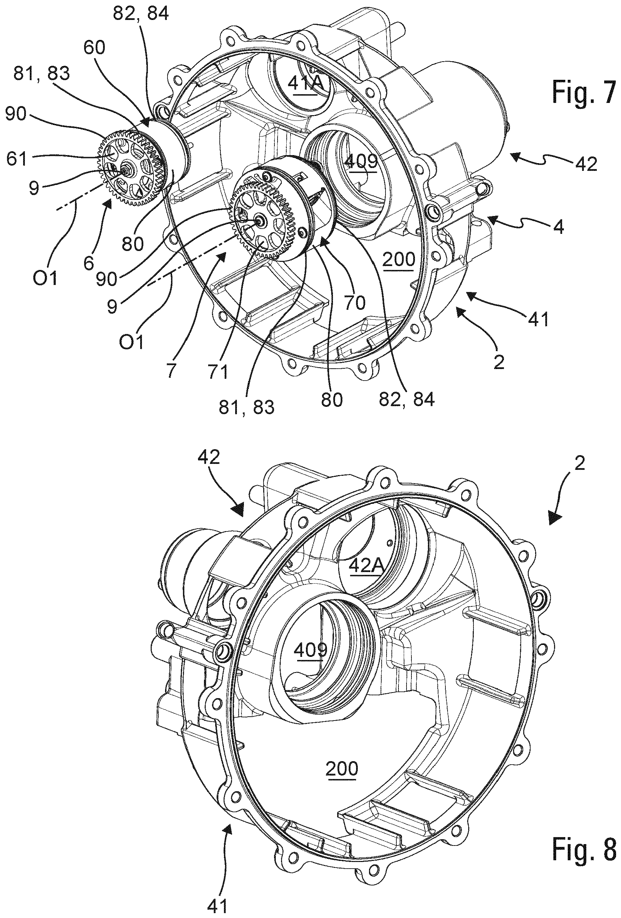

La figure 7 illustre deux pompes hydrauliques 6,7 selon le premier aspect de l'invention avant leur assemblage dans une interface 4 selon un deuxième mode de réalisation selon lequel la première et la deuxième parties sont réalisées en une seule pièce. Ainsi dans l'exemple de réalisation des figures 7 et 8, la cloche d'embrayage 2, la première partie comporte une jupe de la cloche d'embrayage et la deuxième partie forme une base de la cloche d'embrayage.

Les pompes hydrauliques 6,7 comprennent un corps 60, 70 délimité par un contour extérieur 80 sur lequel est formée au moins une rainure périphérique. Dans l'exemple illustré le contour extérieur 80 de chaque pompe 6,7 comporte une première rainure périphérique 81 et une seconde rainure périphériques 82, configurées pour recevoir chacune un premier joint 83 et second joint 84 destinés à assurer une étanchéité de contact entre le corps 60, 70 de la pompe hydraulique et l'interface de connexion hydraulique 4. De façon avantageuse, l'ouverture d'entrée et l'ouverture de sortie sont formées sur le corps de la pompe hydraulique entre la première rainure et la deuxième rainure.

Comme illustré sur la figure 7, les pompes 6, 7 sont disposées par la face avant de la cloche d'embrayage 2 pour être insérées dans la première partie 41 de l'interface de connexion hydraulique 4.

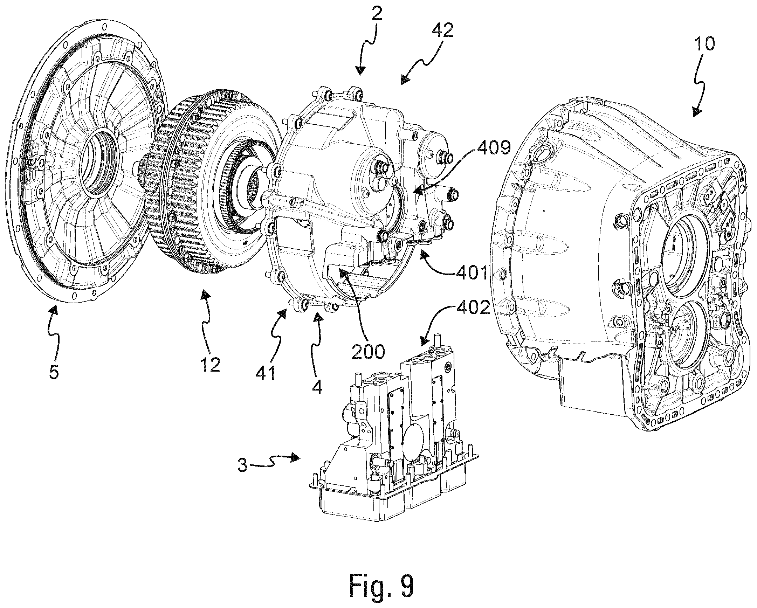

Les pompes 6, 7 sont ainsi insérées dans la cloche d'embrayage 2 avant un module de transmission de couple 12 comportant au moins un embrayage. On peut ainsi former un mécanisme d'embrayage préassemblé pouvant être livré chez un client. Ainsi, le module d'embrayage illustré à la figure 9 comporte, outre le module de transmission de couple 12, l'interface de connexion hydraulique 4 correspondant à la figure 7, logeant les pompes hydrauliques 6, 7. L'exemple illustré il comporte également une servocommande hydraulique 3. Lors de la livraison au client le module de transmission de couple 12 est par exemple au moins en partie logé dans la cloche d'embrayage 2 fermée par la plaque de fermeture 5. Une ouverture centrale 409 traversant la cloche d'embrayage 2 est prévue pour recevoir des arbres de transmission de la transmission.

## Revendications

1. Pompe hydraulique (6, 7) pour mécanisme d'embrayage (1) d'une transmission de véhicule, la pompe hydraulique (6, 7) comprenant un corps (60, 70) dans lequel sont formées une chambre (61, 71), une ouverture d'entrée (62, 72) par laquelle un fluide hydraulique est apte à entrer dans la chambre (61, 71), et une ouverture de sortie (63, 73) par laquelle le fluide hydraulique est apte à sortir de la chambre (61, 71), la chambre (61, 71) recevant au moins une roue hydraulique de la pompe hydraulique (6, 7), l'ouverture d'entrée (62, 72) et l'ouverture de sortie (63, 73) débouchant chacune sur la chambre (61, 71) du corps (60, 70), **caractérisé en ce que** le corps (60, 70) de la pompe hydraulique (6, 7) est délimité par un contour extérieur (80) sur lequel est formée au moins une rainure périphérique (81, 82) configurée pour recevoir un joint (83, 84), le joint (83, 84) étant destiné à assurer une étanchéité de contact entre, d'une part, le corps (60, 70) de la pompe hydraulique (6, 7) et, d'autre part, une interface de connexion hydraulique (4) du mécanisme d'embrayage (1).

2. Pompe hydraulique (6, 7) selon la revendication précédente, **caractérisée en ce qu'**elle comprend des moyens de fixation (700) du corps (60, 70) de pompe hydraulique (6, 7) configurés pour coopérer avec des moyens de fixation complémentaires (701) de l'interface de connexion hydraulique (4).

3. Pompe hydraulique (6, 7) selon l'une quelconque des revendications précédentes, **caractérisée en ce qu'**elle comprend un arbre d'entraînement (9) s'étendant le long d'un axe de rotation (O1) pour, d'un côté, être logé dans le corps (60, 70) de la pompe hydraulique (6, 7) afin d'entraîner en rotation la roue hydraulique autour de l'axe de rotation (O1) de l'arbre d'entraînement (9) et pour, d'un autre côté, émerger du corps (60, 70) de la pompe hydraulique (6, 7) pour venir en prise avec un pignon d'entraînement (90).

4. Interface de connexion hydraulique (4) pour mécanisme d'embrayage (1) d'une transmission de véhicule, l'interface de connexion hydraulique (4) comprenant au moins une pompe hydraulique (6, 7) selon l'une quelconque des revendications 1 à 3.

5. Interface de connexion hydraulique (4) selon la revendications 4, **caractérisée en ce que** le corps (60, 70) d'au moins la pompe hydraulique (6, 7) est logé dans l'interface de connexion hydraulique (4) entre une première partie (41) et une deuxième partie (42) de l'interface de connexion hydraulique (4).

6. Interface de connexion hydraulique (4) selon la revendication précédente, **caractérisée en ce qu'**un joint plan (8) est disposé entre la première partie (41) et la deuxième partie (42) de l'interface de connexion hydraulique (4).

7. Interface de connexion hydraulique (4) selon la revendication précédente, **caractérisée en ce que** la première partie (41) comprend un plan d'accostage (405) et la deuxième partie (42) comprend un plan d'accostage (406), le joint plan (8) étant disposé entre le premier plan d'accostage (405) de la première partie (41) et le plan d'accostage (406) de la deuxième partie (42), des conduits hydrauliques (64, 65, 74, 75) formés, d'une part, dans la première partie (41) débouchent sur le plan d'accostage (405) de la première partie (41) et, d'autre part, dans la deuxième partie (42) débouchent sur le plan d'accostage (406) de la deuxième partie (42).

8. Interface de connexion hydraulique (4) selon la revendication précédente, **caractérisée en ce qu'**un premier conduit hydraulique (64, 74 est configuré pour acheminer le fluide hydraulique vers l'ouverture d'entrée (62, 72) de l'au moins une pompe hydraulique (6, 7).

9. Interface de connexion hydraulique (4) selon la revendication précédente, **caractérisée en ce qu'**un deuxième conduit hydraulique (65, 75) est configuré pour diriger le fluide hydraulique depuis l'ouverture de sortie (63, 73) de l'au moins une pompe hydraulique (6, 7).

10. Interface de connexion hydraulique (4) selon l'une quelconque des revendications 4 à 9, **caractérisée en ce que** la première partie (41) de l'interface hydraulique est formée conjointement avec une cloche d'embrayage (2) du mécanisme d'embrayage (1).

11. Interface de connexion hydraulique (4) selon la revendication précédente, **caractérisée en ce que** la cloche d'embrayage (2) est configurée pour loger un module de transmission de couple (12) du mécanisme d'embrayage (1).

12. Mécanisme d'embrayage (1) d'une transmission de véhicule comprenant une interface de connexion hydraulique (4) selon l'une quelconque des revendications 4 à 11.

13. Mécanisme d'embrayage (1) selon la revendication précédente, **caractérisé en ce qu'**il comprend une cloche d'embrayage (2) sur laquelle est formée en partie l'interface de connexion hydraulique (4).

14. Mécanisme d'embrayage (1) selon la revendication précédente, **caractérisé en ce qu'**il comprend un module de transmission de couple (12) comprenant un flasque et un couvercle délimitant entre eux une chambre d'embrayage logeant au moins un embrayage du mécanisme d'embrayage (1), le module de transmission de couple (12) étant prévu pour être au moins en partie logé dans la cloche d'embrayage (2).

15. Mécanisme d'embrayage (1) selon la revendication précédente, **caractérisé en ce qu'**il comprend une servocommande hydraulique (3) du mécanisme d'embrayage (1), la servocommande hydraulique (3) étant reliée à l'interface de connexion hydraulique (4) par un premier plan de connexion hydraulique (401) de l'interface de connexion hydraulique (4) en correspondance d'un premier plan de connexion hydraulique (402) de la servocommande hydraulique (3).

## Patentansprüche

1. Hydraulikpumpe (6, 7) für einen Kupplungsmechanismus (1) eines Fahrzeuggetriebes, wobei die Hydraulikpumpe (6, 7) ein Gehäuse (60, 70) umfasst, in welchem eine Kammer (61, 71), eine Eintrittsöffnung (62, 72), über welche ein Hydraulikfluid in die Kammer (61, 71) eintreten kann, und eine Austrittsöffnung (63, 73), über welche das Hydraulikfluid aus der Kammer (61, 71) austreten kann, ausgebildet sind, wobei die Kammer (61, 71) wenigstens ein hydraulisches Rad der Hydraulikpumpe (6, 7) aufnimmt, wobei die Eintrittsöffnung (62, 72) und die Austrittsöffnung (63, 73) jeweils in die Kammer (61, 71) des Gehäuses (60, 70) münden, **dadurch gekennzeichnet, dass** das Gehäuse (60, 70) der Hydraulikpumpe (6, 7) von einer Außenkontur (80) begrenzt wird, an welcher wenigstens eine umlaufende Nut (81, 82) ausgebildet ist, die dafür ausgelegt ist, eine Dichtung (83, 84) aufzunehmen, wobei die Dichtung (83, 84) dazu bestimmt ist, eine Kontaktdichtheit zwischen einerseits dem Gehäuse (60, 70) der Hydraulikpumpe (6, 7) und andererseits einer hydraulischen Verbindungsschnittstelle (4) des Kupplungsmechanismus (1) sicherzustellen.

2. Hydraulikpumpe (6, 7) nach dem vorhergehenden Anspruch, **dadurch gekennzeichnet, dass** sie Befestigungsmittel (700) des Gehäuses (60, 70) der Hydraulikpumpe (6, 7) umfasst, die dafür ausgelegt sind, mit komplementären Befestigungsmitteln (701) der hydraulischen Verbindungsschnittstelle (4) zusammenzuwirken.

3. Hydraulikpumpe (6, 7) nach einem der vorhergehenden Ansprüche, **dadurch gekennzeichnet, dass** sie eine Antriebswelle (9) umfasst, die sich entlang einer Drehachse (O1) erstreckt, um auf einer Seite in dem Gehäuse (60, 70) der Hydraulikpumpe (6, 7) aufgenommen zu werden, um das hydraulische Rad um die Drehachse (O1) der Antriebswelle (9) drehend anzutreiben, und um auf einer anderen Seite aus dem Gehäuse (60, 70) der Hydraulikpumpe (6, 7) auszutreten, um mit einem Antriebsritzel (90) in Eingriff zu gelangen.

4. Hydraulische Verbindungsschnittstelle (4) für einen Kupplungsmechanismus (1) eines Fahrzeuggetriebes, wobei die, wobei die hydraulische Verbindungsschnittstelle (4) wenigstens eine Hydraulikpumpe (6, 7) nach einem der Ansprüche 1 bis 3 umfasst.

5. Hydraulische Verbindungsschnittstelle (4) nach Anspruch 4, **dadurch gekennzeichnet, dass** das Gehäuse (60, 70) wenigstens der Hydraulikpumpe (6, 7) in der hydraulischen Verbindungsschnittstelle (4) zwischen einem ersten Teil (41) und einem zweiten Teil (42) der hydraulischen Verbindungsschnittstelle (4) aufgenommen ist.

6. Hydraulische Verbindungsschnittstelle (4) nach dem vorhergehenden Anspruch, **dadurch gekennzeichnet, dass** eine Flachdichtung (8) zwischen dem ersten Teil (41) und dem zweiten Teil (42) der hydraulischen Verbindungsschnittstelle (4) angeordnet ist.

7. Hydraulische Verbindungsschnittstelle (4) nach dem vorhergehenden Anspruch, **dadurch gekennzeichnet, dass** der erste Teil (41) eine Anlageebene (405) umfasst und der zweite Teil (42) eine Anlageebene (406) umfasst, wobei die Flachdichtung (8) zwischen der ersten Anlageebene (405) des ersten Teils (41) und der Anlageebene (406) des zweiten Teils (42) angeordnet ist, wobei Hydraulikleitungen (64, 65, 74, 75), die einerseits im ersten Teil (41) und andererseits im zweiten Teil (42) ausgebildet sind, in der Anlageebene (405) des ersten Teils (41) münden bzw. in der Anlageebene (406) des zweiten Teils (42) münden.

8. Hydraulische Verbindungsschnittstelle (4) nach dem vorhergehenden Anspruch, **dadurch gekennzeichnet, dass** eine erste Hydraulikleitung (64, 74) dafür ausgelegt ist, das Hydraulikfluid zur Eintrittsöffnung (62, 72) der wenigstens einen Hydraulikpumpe (6, 7) zu transportieren.

9. Hydraulische Verbindungsschnittstelle (4) nach dem vorhergehenden Anspruch, **dadurch gekennzeichnet, dass** eine zweite Hydraulikleitung (65, 75) dafür ausgelegt ist, das Hydraulikfluid von der der Austrittsöffnung (63, 73) der wenigstens einen Hydraulikpumpe (6, 7) aus zu leiten.

10. Hydraulische Verbindungsschnittstelle (4) nach einem der Ansprüche 4 bis 9, **dadurch gekennzeichnet, dass** der erste Teil (41) der hydraulischen Schnittstelle zusammen mit einer Kupplungsglocke (2) des Kupplungsmechanismus (1) ausgebildet ist.

11. Hydraulische Verbindungsschnittstelle (4) nach dem vorhergehenden Anspruch, **dadurch gekennzeichnet, dass** die Kupplungsglocke (2) dafür ausgelegt ist, ein Drehmomentübertragungsmodul (12) des Kupplungsmechanismus (1) aufzunehmen.

12. Kupplungsmechanismus (1) eines Fahrzeuggetriebes, welcher eine hydraulische Verbindungsschnittstelle (4) nach einem der Ansprüche 4 bis 11 umfasst.

13. Kupplungsmechanismus (1) nach dem vorhergehenden Anspruch, **dadurch gekennzeichnet, dass** er eine Kupplungsglocke (2) umfasst, auf welcher die hydraulische Verbindungsschnittstelle (4) zum Teil ausgebildet ist.

14. Kupplungsmechanismus (1) nach dem vorhergehenden Anspruch, **dadurch gekennzeichnet, dass** er ein Drehmomentübertragungsmodul (12) umfasst, das ein Seitenstück und einen Deckel umfasst, die zwischen sich eine Kupplungskammer begrenzen, die wenigstens eine Kupplung des Kupplungsmechanismus (1) aufnimmt, wobei das Drehmomentübertragungsmodul (12) dafür vorgesehen ist, wenigstens teilweise in der Kupplungsglocke (2) aufgenommen zu werden.

15. Kupplungsmechanismus (1) nach dem vorhergehenden Anspruch, **dadurch gekennzeichnet, dass** er eine hydraulische Servosteuerung (3) des Kupplungsmechanismus (1) umfasst, wobei die hydraulische Servosteuerung (3) mit der hydraulischen Verbindungsschnittstelle (4) durch eine erste Hydraulikverbindungsebene (401) der hydraulischen Verbindungsschnittstelle (4) verbunden ist, die sich mit einer ersten Hydraulikverbindungsebene (402) der hydraulischen Servosteuerung (3) in Übereinstimmung befindet.

## Claims

1. A hydraulic pump (6, 7) for a clutch mechanism (1) of a vehicle transmission, the hydraulic pump (6, 7) comprising a body (60, 70) in which there are formed a chamber (61, 71), an inlet port (62, 72) through which a hydraulic fluid can enter the chamber (61, 71), and an outlet port (63, 73) through which the hydraulic fluid can leave the chamber (61, 71), the chamber (61, 71) receiving at least one hydraulic wheel of the hydraulic pump (6, 7), the inlet port (62, 72) and the outlet port (63, 73) each opening into the chamber (61, 71) of the body (60, 70), **characterized in that** the body (60, 70) of the hydraulic pump (6, 7) is delimited by an outer edge (80) on which at least one peripheral groove (81, 82) is formed, configured to receive a gasket (83, 84), the gasket (83, 84) being intended to provide contact sealing between the body (60, 70) of the hydraulic pump (6, 7) and a hydraulic connection interface (4) of the clutch mechanism (1).

2. The hydraulic pump (6, 7) as claimed in the preceding claim, **characterized in that** it comprises attachment means (700) of the body (60, 70) of the hydraulic pump (6, 7) configured to cooperate with complementary attachment means (701) of the hydraulic connection interface (4).

3. The hydraulic pump (6, 7) as claimed in any one of the preceding claims, **characterized in that** it comprises a drive shaft (9) extending along an axis of rotation (O1), on the one hand being housed in the body (60, 70) of the hydraulic pump (6, 7) in order to rotate the hydraulic wheel around the axis of rotation (O1) of the drive shaft (9), and on the other hand emerging from the body (60, 70) of the hydraulic pump (6, 7) in order to engage with a drive pinion (90).

4. A hydraulic connection interface (4) for a clutch mechanism (1) of a vehicle transmission, the hydraulic connection interface (4) comprising at least one hydraulic pump (6, 7) as claimed in any one of claims 1 to 3.

5. The hydraulic connection interface (4) as claimed in claim 4, **characterized in that** the body (60, 70) of at least the hydraulic pump (6, 7) is housed in the hydraulic connection interface (4) between a first part (41) and a second part (42) of the hydraulic connection interface (4).

6. The hydraulic connection interface (4) as claimed in the preceding claim, **characterized in that** a flat gasket (8) is arranged between the first part (41) and the second part (42) of the hydraulic connection interface (4).

7. The hydraulic connection interface (4) as claimed in the preceding claim, **characterized in that** the first part (41) comprises a docking plane (405) and the second part (42) comprises a docking plane (406), the flat gasket (8) being arranged between the first docking plane (405) of the first part (41) and the docking plane (406) of the second part (42), hydraulic conduits (64, 65, 74, 75) formed, on the one hand, in the first part (41), opening on the docking plane (405) of the first part (41), and formed, on the other hand, in the second part (42), opening on the docking plane (406) of the second part (42).

8. The hydraulic connection interface (4) as claimed in the preceding claim, **characterized in that** a first hydraulic conduit (64, 74) is configured to convey the hydraulic fluid to the inlet opening (62, 72) of the at least one hydraulic pump (6, 7).

9. The hydraulic connection interface (4) as claimed in the preceding claim, **characterized in that** a second hydraulic conduit (65, 75) is configured to convey the hydraulic fluid from the outlet opening (63, 73) of the at least one hydraulic pump (6, 7).

10. The hydraulic connection interface (4) as claimed in any one of claims 4 to 9, **characterized in that** the first part (41) of the hydraulic interface is formed together with a clutch housing (2) of the clutch mechanism (1).

11. The hydraulic connection interface (4) as claimed in the preceding claim, **characterized in that** the clutch housing (2) is configured to house a torque transmission module (12) of the clutch mechanism (1).

12. A clutch mechanism (1) of a vehicle transmission comprising a hydraulic connection interface (4) as claimed in any one of claims 4 to 11.

13. The clutch mechanism (1) as claimed in the preceding claim, **characterized in that** it comprises a clutch housing (2) on which the hydraulic connection interface (4) is formed, in part.

14. The clutch mechanism (1) as claimed in the preceding claim, **characterized in that** it comprises a torque transmission module (12) comprising a flange and a cover that together delimit a clutch chamber housing at least one clutch of the clutch mechanism (1), the torque transmission module (12) being designed to be housed at least partially in the clutch housing (2).

15. The clutch mechanism (1) as claimed in the preceding claim, **characterized in that** it comprises a hydraulic servo control (3) of the clutch mechanism (1), the hydraulic servo control (3) being connected to the hydraulic connection interface (4) by a first hydraulic connection plane (401) of the hydraulic connection interface (4) matching a first hydraulic connection plane (402) of the hydraulic servo control (3).
